(19) Europäisches Patentamt / European Patent Office / Office européen des brevets

(11) **EP 2 009 267 A2**

(12) **EUROPEAN PATENT APPLICATION**

(43) Date of publication:
**31.12.2008 Bulletin 2009/01**

(51) Int Cl.:
*F02D 41/00* (2006.01)    *F02D 21/08* (2006.01)
*F02M 25/07* (2006.01)

(21) Application number: **08011616.3**

(22) Date of filing: **26.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **27.06.2007   JP 2007168363**

(71) Applicant: **Hitachi Ltd.**
**Chiyoda-ku**
**Tokyo 100-8280 (JP)**

(72) Inventor: **Ohata, Eiichiro**
**Tokyo 100-8220 (JP)**

(74) Representative: **Matias, Bruno M.**
**Beetz & Partner**
**Patentanwälte**
**Steinsdorfstrasse 10**
**80538 München (DE)**

(54)    **Measurement methods and measuring equipment for flow of exhaust gas re-circulation**

(57)    The invention relates to measurement methods and a measuring equipment for flow of exhaust gas re-circulation, in order to prevent performances of exhaust, fuel efficiency, and power output from deteriorating due to reasons such as large loss in pressure and time, a control delay during an excessive operation, and reduction in an exhaust gas re-circulation gas flow rate upon measuring an exhaust gas re-circulation gas flow rate, an exhaust gas re-circulation gas flow rate is measured by a plurality of measurement methods on the basis of an intake air flow rate and pressure before and after a heat exchanger 10 installed at an exhaust gas re-circulation passage 9 and the measurement methods are carried out by performing a mutual comparison of the measurement flow rates. Accordingly, it is possible to measure the exhaust gas re-circulation gas flow rate with high precise in a short response time without increasing loss in pressure, and thus to improve performances of exhaust, fuel efficiency, and power output.

FIG.1

**Description**

Field of the Invention

The present invention relates to an exhaust gas re-circulator for a diesel engine, and more particularly, to a technique for appropriately measuring an exhaust gas re-circulation gas flow rate.

Description of Related Art

In order to reduce a discharge amount of nitrogen oxides of exhaust gas generated from an internal combustion engine, it is effective to restrict a combustion temperature by means of the exhaust gas re-circulation. Particularly, in a diesel engine, an exhaust gas re-circulation gas flow rate can be increased more than that of a gasoline engine. However, when the exhaust gas re-circulation gas flow rate is increased too much, a problem arises in that fuel efficiency deteriorates and soot increases. For this reason, it is necessary to appropriately maintain the exhaust gas re-circulation gas flow rate in accordance with a driving state. In addition, it is necessary to provide a measurement method for measuring the exhaust gas re-circulation gas flow rate with high precision in a short response time in order to cope with a variation in driving state. For this reason, for instance, JP-A-1-178760 discloses a technique for calculating the exhaust gas re-circulation gas flow rate on the basis of the measurement value of a gas density detector. Additionally, JP-A-2007-101426 discloses a technique for calculating the exhaust gas re-circulation gas flow rate by use of a hot wire type air flow sensor.

In the technique disclosed in JP-A-1-178760, it is not appropriate to solve the above-described problems in that it takes time to measure gas density. Meanwhile, in the technique disclosed in JP-A-2007-101426, the thermal flow meter has a short response time, but it is difficult to measure a counter flow, and additionally, a heating resistor needs to be installed in a passage, which causes pressure loss. As a result, a problem arises in that the exhaust gas re-circulation gas flow rate decreases upon installing sensors for measuring the exhaust gas re-circulation gas flow rate.

Brief Summary of the Invention

In order to attain the above-described object, according to an aspect of the invention, there is provided a measuring equipment for flow of exhaust gas re-circulation including: a control valve which is provided in an exhaust gas re-circulation passage of an internal combustion engine so as to control a flow rate in the exhaust gas re-circulation passage; a heat exchanger which cools exhaust gas re-circulation gas; pressure sensors which measure pressures of the exhaust gas re-circulation gas at two or more positions of the exhaust gas re-circulation passage before and after the heat exchanger; a temperature sensor which measures temperature of the exhaust gas re-circulation gas; and/or an intake air flow sensor which is provided in an intake air passage so as to measure a flow rate of intake air. The measuring equipment further includes: a first exhaust gas re-circulation gas flow measuring unit which calculates a first exhaust gas re-circulation gas flow rate on the basis of a phase-difference time of a pressure waveform at two or more positions measured by the pressure sensors, a distance of the exhaust gas re-circulation passage between two or more different pressure measurement positions and a sectional area of the exhaust gas re-circulation passage of the heat exchanger. According to the invention, it is possible to carry out the flow rate measurement in a short response time without additionally providing a pressure loss source.

According to another aspect of the invention, the measuring equipment further includes: a second exhaust gas re-circulation gas flow measuring unit which calculates a second exhaust gas re-circulation gas flow rate on the basis of a difference between pressure values measured at two or more different measurement positions by the pressure sensors and the sectional area of the exhaust gas re-circulation passage of the heat exchanger. According to the invention, it is possible to simultaneously measure the exhaust gas re-circulation gas flow rate by means of a plurality of measurement methods and to determine whether the correction is necessary by comparing the measurement values.

According to another aspect of the invention, the measuring equipment further includes: a third exhaust gas re-circulation gas flow measuring unit which calculates a third exhaust gas re-circulation gas flow rate on the basis of a difference between the intake air flow rate measured by the intake air flow sensor and a predetermined value for each operation state of the internal combustion engine. According to the invention, it is possible to simultaneously measure the exhaust gas re-circulation gas flow rate by means of a plurality of measurement methods and to determine whether the correction is necessary by comparing the measurement values. When the correction is necessary, it is possible to estimate a damage state of the heat exchanger by back calculating a sectional area value of the exhaust gas re-circulation passage of the heat exchanger on the basis of the flow rate.

According to another aspect of the invention, the measuring equipment further includes: a calculation unit which calculates a quotient of a pressure difference between pressure values measured at two or more measurement positions by the pressure sensors and an amplitude of the pressure difference, and a difference between the quotient and a predetermined value. According to the invention, it is possible to estimate the measurement method having the highest precision by comparing the above calculation result with a previously researched relationship between measurement errors in the respective measurement methods and the difference.

According to the invention, it is possible to measure the exhaust gas re-circulation gas flow rate with high precision in a short response time, and to accurately measure the exhaust gas re-circulation gas flow rate even when the internal combustion engine is transitionally operated. Accordingly, it is possible to high-precisely set the internal combustion engine's output performances such as fuel efficiency, nitrogen oxide, soot and noise in such a manner that a comparison result between the exhaust gas re-circulation gas flow rate measurement value and the exhaust gas re-circulation gas flow rate target value is reflected in an opening degree of the exhaust gas re-circulation gas flow control valve.

Other objects, features and advantages of the invention will become apparent from the following description of the embodiments of the invention taken in conjunction with the accompanying drawings.

Brief Description of Several Views of Drawings

Fig. 1 is an explanatory diagram illustrating a position setting and a connection configuration of units necessary for a measurement related to the invention.

Fig. 2 is an explanatory diagram illustrating an example in which another sensor is attached to perform the measurement related to the invention (Embodiment 1).

Fig. 3 is an explanatory diagram illustrating a method for performing the measurement related to the invention (Embodiment 1).

Fig. 4 is an explanatory diagram illustrating the method for performing the measurement related to the invention (Embodiment 1).

Fig. 5 is an explanatory diagram illustrating the method for performing the measurement related to the invention (Embodiment 2).

Fig. 6 is an explanatory diagram illustrating the method for performing the measurement related to the invention (Embodiment 2).

Fig. 7 is a flowchart illustrating a method for performing the measurement related to the invention (Embodiment 3).

Fig. 8 is a flowchart illustrating another method for performing the measurement related to the invention (Embodiment 4).

Fig. 9 is a flowchart illustrating another method for performing the measurement related to the invention (Embodiment 5).

Fig. 10 is a flowchart illustrating another method for performing the measurement related to the invention (Embodiment 6).

Fig. 11 is an explanatory diagram illustrating the method for performing the measurement related to the invention (Embodiment 7).

Fig. 12 is an explanatory diagram illustrating the method for performing the measurement related to the invention (Embodiment 8).

Fig. 13 is a diagram illustrating a relationship between a correlation coefficient and a pulsation amplitude ratio.

Detailed Description of the Invention

Hereinafter, Embodiments according to the invention will be described with reference to the accompanying drawings.

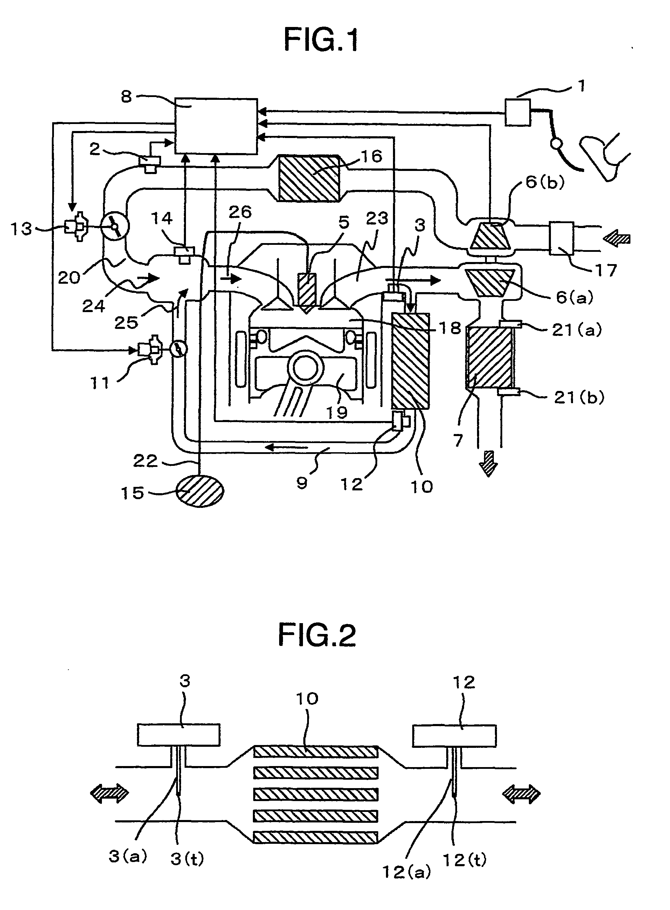

Fig. 1 is a configuration diagram illustrating a control device for an engine according to Embodiment 1 of the invention. Reference Numeral 19 shown in Fig. 1 denotes an engine. An air cleaner 17, an air flow sensor 2, a compressor 6(b) of a supercharger, an intercooler 16, a throttle 13 for adjusting an intake air flow rate, an intake pipe 20, and a fuel injection valve (hereinafter, an injector) 5 are arranged on the upstream side of the engine 19. In this embodiment, an intake air flow controlling unit includes the compressor 6(b), the intercooler 16 and the throttle 13, and an intake air flow detecting unit includes the air flow sensor 2. The injector 5 is configured to directly inject fuel into a combustion chamber 18. It is desirable that the throttle 13 is an electronic control throttle which drives a throttle valve by an electric actuator. In this embodiment, an intake pressure sensor 14 is disposed in the intake pipe 20 so as to appropriately control an intake amount by detecting a pressure within the intake pipe 20. An exhaust pressure/exhaust temperature sensor 3 is disposed in an exhaust pipe 23. An exhaust gas re-circulation passage 9 for re-circulating the exhaust gas to the intake pipe 20, an exhaust gas re-circulation gas heat exchanger 10, and an exhaust gas re-circulation gas flow control valve 11 are installed in the exhaust pipe 23. In addition, the invention is characterized in that an exhaust gas re-circulation gas pressure/temperature sensor 12 is disposed in the exhaust gas re-circulation passage 9 so as to detect a pressure and/or a temperature of the exhaust gas re-circulation gas. In this embodiment, the exhaust gas re-circulation gas pressure/temperature sensor 12, the exhaust pressure/exhaust temperature sensor 3, and the air flow sensor 2 are used to measure the exhaust gas re-circulation gas flow rate. The injector 5 injects a predetermined amount of fuel in accordance with target engine torque calculated by an opening degree signal α output from an accelerator opening degree sensor 1, and appropriately corrects the fuel amount in accordance with outputs such as an opening degree signal θtp output from the throttle 13, an opening degree signal θegr output from the exhaust gas re-circulation gas flow control valve 11, and a supercharge pressure Ptin output from the compressor 6(b). Reference Numeral 8 denotes an engine control unit (hereinafter, ECU) which determines a combustion mode or a control amount of the engine 19 in accordance with a user request such as an accelerator opening degree α or a brake state, a vehicle state such as a vehicle speed, and an engine driving condition such as a temperature of an engine cooling water or a temperature of exhaust gas.

Embodiment 1

Figs. 2 to 4 illustrate an exemplary measurement method among the measurement methods according to the invention.

The drawings show the arrangement positions of the exhaust gas re-circulation gas heat exchanger 10 for cooling the exhaust gas re-circulation gas, exhaust pressure/exhaust temperature sensors 3, 3', 3", and the exhaust gas re-circulation gas pressure/temperature sensors 12, 12', 12" which are arranged at two or more positions in the passage before and after the exhaust gas re-circulation gas heat exchanger 10 so as to measure the pressure and the temperature of the exhaust gas re-circulation gas.

Since the measurement values of the temperature and the pressure are used to calculate a sonic speed or a gas density, the measurement needs to be carried out in a space having the same condition. Thus, static pressure measurement portions 3(a), 3'(a), 3"(a), 12(a), 12'(a), 12"(a), positive-flow-direction dynamic pressure measurement portions 3'(b), 3"(b), 12'(b), 12"(b), and negative-flow-direction dynamic pressure measurement portions 3"(c), 12"(c) among pressure measurement portions and temperature measurement portions 3(t), 3'(t), 3"(t), 12(t), 12'(t), 12"(t) need to be respectively approximated to each other.

The measurement positions of the temperature measurement portions 3(t), 3'(t), 3"(t), 12(t), 12'(t), 12"(t) are set to the center of a passage section so as to measure an average temperature of gas in space and the temperature measurement portions 3'(t), 3"(t), 12(t), 12'(t), 12"(t) are installed at two positions before and after the heat exchanger 10. An average value in space of the exhaust gas re-circulation gas as a measurement object within the entire passage is obtained in such a manner that a sum of the temperatures measured at two positions is obtained and a quotient is obtained by dividing the sum by two, thereby reducing an error of a measured temperature due to a heat loss by the heat exchanger 10. The pressure measurement is carried out for the purpose of a gas density calculation, a gas flow direction determination, or a pressure loss detection and a pressure propagation detection of the heat exchanger 10.

For this reason, in the minimum configuration shown in Fig. 2, the pressure measurement is carried out by the static pressure measurement portions 3(a), 12(a) among the exhaust pressure/exhaust temperature sensor 3 and the exhaust gas re-circulation gas pressure/temperature sensor 12, and the above-described purpose is attained by measuring only static pressure values before and after the heat exchanger 10.

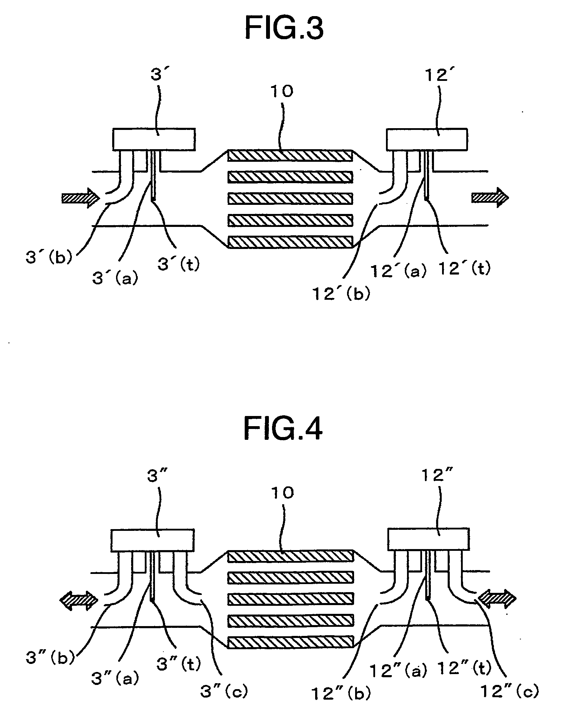

Fig. 3 shows a case that only the pressure propagation detection is carried out by the positive-flow-direction dynamic pressure measurement portions 3'(b), 12'(b) among the exhaust pressure/exhaust temperature sensor 3' and the exhaust gas re-circulation gas pressure/temperature sensor 12' installed before and after the heat exchanger 10. Since pressure measurement holes of the dynamic pressure measurement portions face the gas flow direction, speed energy is changed into pressure energy in the pressure measurement holes, and thus it is possible to obtain more accurate amplitude signals. Accordingly, it is possible to improve precision of a first exhaust gas re-circulation gas flow rate which is measured by the use of a phase-difference time of a pressure waveform, described in detail later. In addition, in a case that a check valve is attached instead of the exhaust gas re-circulation gas flow control valve 11 or a case that the exhaust gas re-circulation gas flow control valve 11 is closed when it is determined as a negative flow condition on the basis of a difference between static pressure values measured before and after the heat exchanger 10 by the exhaust pressure/exhaust temperature sensor 3' and the exhaust gas re-circulation gas pressure/temperature sensor 12', the negative-flow-direction flow rate measurement is not necessary, and thus, the dynamic pressure measurement is carried out only in an one-way direction. In this case, the intake pressure and the exhaust pressure are simultaneously measured by the exhaust gas/exhaust temperature sensor 3 and the intake pressure sensor 14, and a control for re-opening the exhaust gas re-circulation gas flow control valve 11 is carried out at the time point when the positive-flow-direction condition is determined.

Fig. 4 shows a case that the flow rate can be measured in the negative flow direction, where only the pressure propagation detection is carried out by the positive-flow-direction dynamic pressure measurement portions 3"(b), 12"(b) and the negative-flow-direction dynamic pressure measurement portions 3"(c), 12"(c) among the exhaust pressure/ exhaust temperature sensor 3" and the exhaust gas re-circulation gas pressure/temperature sensor 12" which are installed before and after the heat exchanger 10. When it is determined as the positive-flow-condition on the basis of a difference between static pressure values measured before and after the heat exchanger 10 by the exhaust pressure/ exhaust temperature sensor 3" and the exhaust gas re-circulation gas pressure/temperature sensor 12", the pressure propagation detection is carried out by the measurement pressure value obtained by the positive-flow-direction dynamic pressure measurement portions 3"(b), 12"(b). In addition, when it is determined as the negative-flow-condition on the basis of a difference between static pressure values measured before and after the heat exchanger 10 by the exhaust pressure/exhaust temperature sensor 3" and the exhaust gas re-circulation gas pressure/temperature sensor 12", the pressure propagation detection is carried out by the measurement pressure value obtained by the positive-flow-direction dynamic pressure measurement portions 3'(c), 12'(c), thereby performing the high-precise flow rate measurement of the exhaust gas re-circulation gas even in the negative flow condition.

Embodiment 2

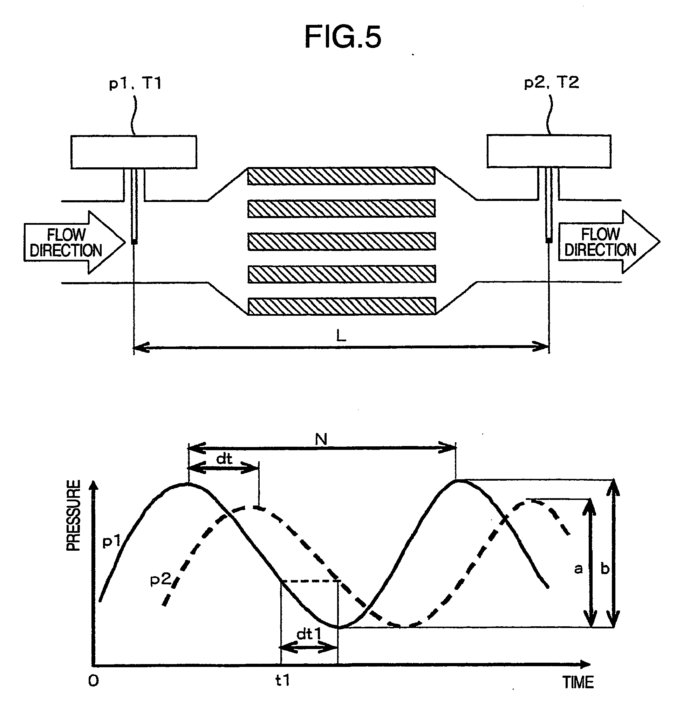

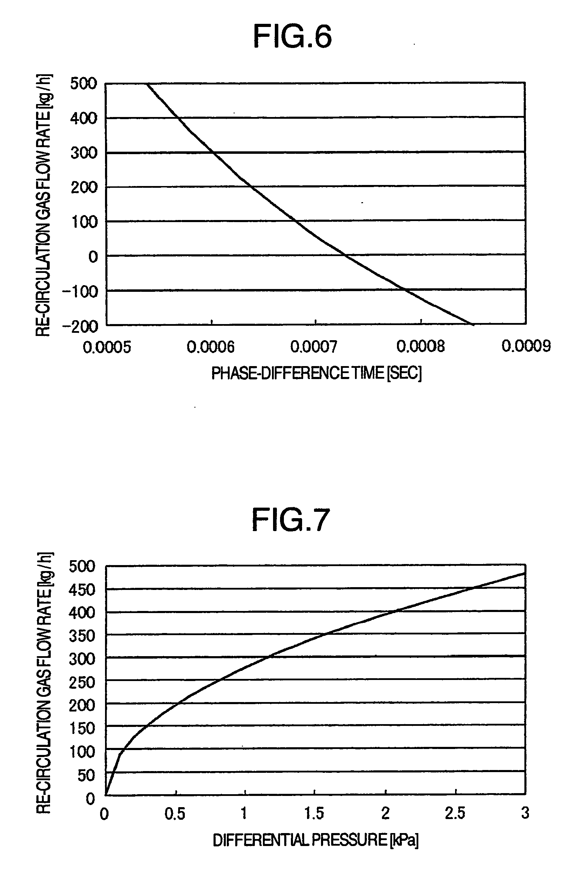

Figs. 5 and 6 show an exemplary flow rate calculation of the exhaust gas re-circulation gas in the measurement methods according to the invention. In Fig. 5, a phase time difference is set to a time difference when the pressure waveforms measured at different positions are compared with each other. Here, a speed at which pressure propagates in gas having a gas flow corresponds to a value obtained by adding a sonic speed to a gas flow speed. Accordingly, it is possible to obtain the gas flow rate by using the following expression:

[Expression 1]

$$Q_{EGR} = \left( \frac{L}{dt} - \sqrt{\kappa\,R\,\frac{(T_1+T_2)}{2}} \right) \times A \times \frac{(p_1+p_2)}{R \times (T_1+T_2)} \qquad \dots \text{formula 1,}$$

wherein

$Q_{EGR}$[kg/h]: exhaust gas re-circulation gas mass flow rate
L[m]: distance in an exhaust gas re-circulation passage between two or more different pressure measurement positions
dt[sec]: phase-difference time
k[-]: specific heat ratio
R[J/kg·K] : gas constant
$T_1$[K]: temperature of exhaust gas re-circulation gas on the upstream side of the exhaust gas re-circulation gas heat exchanger
$T_2$[K]: temperature of exhaust gas re-circulation gas on the downstream side of the exhaust gas re-circulation gas heat exchanger
A[$m^2$]: sectional area of the exhaust gas re-circulation passage
$p_1$[Pa]: pressure of exhaust gas re-circulation gas on the upstream side of the exhaust gas re-circulation gas heat exchanger
$p_2$[Pa]: pressure of exhaust gas re-circulation gas on the downstream side of the exhaust gas re-circulation gas heat exchanger.

Fig. 6 shows a relationship between the phase-difference time and the flow rate upon applying the formula 1. With the above-described method, it is possible to measure the exhaust gas re-circulation gas flow rate without using the differential pressure. Accordingly, it is possible to measure the exhaust gas re-circulation gas flow rate even when the differential pressure cannot be measured due to the low gas flow speed. Here, although parameters except for the gas pressure, the gas temperature and the phase-difference time are constant and are uniquely determined, actually an error occurs due to a drift, a turbulence, a gas component, humidity, and a heat exchange amount of the heat exchanger 10. Accordingly, it is desirable that the correction is carried out by simultaneously using another measurement method.

Embodiment 3

Fig. 7 shows another exemplary flow rate calculation of the exhaust gas re-circulation gas in the measurement methods according to the invention. Since the flow speed is proportional to a value obtained by a square root of the pressure difference between two positions, it is possible to obtain the gas flow rate by using the following expression.

[Expression 2]

$$Q = A \times \sqrt{\frac{2}{R}} \times \sqrt{\frac{\Delta p \cdot (p_1 + p_2)}{(T_1 + T_2)}} \qquad \text{… formula 2}$$

Here, $\Delta p$[Pa]: pressure difference of exhaust gas re-circulation gases before and after exhaust gas re-circulation gas heat exchanger (= $p_1 - p_2$).
Fig. 7 shows a relationship between the differential pressure and the flow rate upon applying the formula 2. With the above-described method, it is possible to measure the exhaust gas re-circulation gas flow rate without using the pulsation component of the pressure waveform. Accordingly, it is possible to measure the exhaust gas re-circulation gas flow rate even when the pulsation component of the pressure waveform cannot be detected because a pressure loss is large between the pulsation component generation source and the pressure measurement position. Here, although parameters except for the gas pressure, the gas temperature, and the differential pressure are constant and are uniquely determined, actually an error occurs due to a drift, a turbulence, a gas component, humidity, and a heat exchange amount of the heat exchanger 10. Accordingly, it is desirable that the correction is carried out by simultaneously using another measurement method.

Embodiment 4

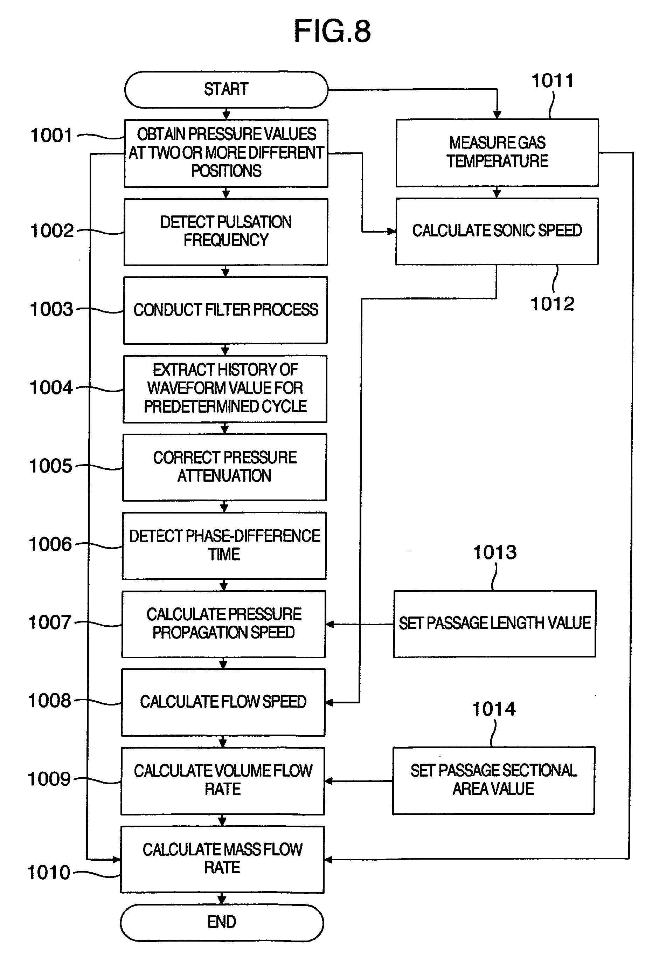

Fig. 8 is a flowchart illustrating an exemplary flow rate calculation procedure of the exhaust gas re-circulation gas in the measurement method according to the invention.
The measurement method according to the invention is carried out by periodically repeating the measurement and the calculation.
First, the pressure value and the temperature value are obtained by the exhaust pressure/exhaust temperature sensor 3 and the exhaust gas re-circulation gas pressure/temperature sensor 12 which are installed before and after the heat exchanger 10 (Blocks 1001 and 1011).
Subsequently, a sonic speed is calculated by comparing with a database stored in advance the pressure value measured at a certain time in Block 1001 and the temperature value measured at a certain time in Block 1011 (Block 1012).
Subsequently, a pulsation frequency is detected by recognizing an interval (N shown in Fig. 5) between peaks of the pressure waveform obtained by a history of the pressure value for a predetermined time obtained in Block 1001 (Block 1002).
Subsequently, a band-pass frequency is set to a value obtained by adding the pulsation frequency detected in Block 1002 to a predetermined constant in terms of an experiment, and unnecessary noise components or undulation components are removed by performing a band-pass filter process of the frequency to the pressure waveform obtained by the history of the pressure value for the predetermined time (Block 1003).
Subsequently, a history of the measurement pressure value necessary for a phase comparison of the pressure waveform is extracted. An extraction period is calculated from a quotient of a predetermined cycle and the pulsation frequency detected in Block 1002, and a history of the measurement pressure value centering around a certain time is extracted (Block 1004).
Subsequently, a pressure attenuation correction is carried out. The pressure waveform on the downstream side of the heat exchanger 10 obtained by the history of the pressure value extracted in Block 1003 is attenuated by the pressure loss of the heat exchanger 10. For this reason, for instance, when comparing the phase of the peak of the pressure waveform on the upstream side of the heat exchanger 10 with that of the peak of the pressure waveform on the downstream side of the heat exchanger 10, it is supposed that precision of the phase comparison deteriorates if the pressure values at both peaks are different from each other. Accordingly, a ratio between the amplitude before the attenuation (a shown in Fig. 5) and the amplitude after the attenuation (b shown in Fig. 5) is set to an attenuation ratio (a/b), and the pressure attenuation correction is carried out by multiplying the pressure value after the attenuation by the attenuation ratio so that the maximum value and the minimum value of both pressure values for a history are identical with each other. As a result, it is possible to reduce deterioration of precision of the phase comparison due to the attenuation (Block 1005).

Subsequently, a phase-difference time (dt1 shown in Fig. 5) is detected. A time difference between a certain time (t1 shown in Fig. 5) and a time at which the pressure value on the upstream side of the heat exchanger 10 is identical with the pressure value subjected to the attenuation correction on the downstream side of the heat exchanger 10 at the above certain time is recognized. When there are a plurality of the pressure values having the same value, the phase-difference time is set to a time difference of which an absolute value is the smallest (Block 1006).

Subsequently, a passage length value setting is carried out. This corresponds to the gas passage length (L shown in Fig. 5) between the pressure sensor attachment positions (Block 1013).

Subsequently, a pressure propagation speed calculation is carried out. A quotient is obtained from a quotient of the phase-difference time obtained in Block 1006 and the passage length set in Block 1013 (Block 1007).

Subsequently, a flow speed calculation is carried out. A difference is obtained between the pressure propagation speed obtained in Block 1007 and the sonic speed obtained in Block 1012 (Block 1008).

Subsequently, a passage sectional area setting is carried out. This corresponds to a gas passage sectional area in the heat exchanger 10 (Block 1014).

Subsequently, a volume flow rate calculation is carried out. A value is obtained by multiplying the flow speed obtained in Block 1008 by the passage sectional area obtained in Block 1014 (Block 1009).

Subsequently, a mass flow rate calculation is carried out. Density of the exhaust gas re-circulation gas is obtained by a gas constant calculated from the pressure value at a certain time obtained in Block 1001, the gas temperature at a certain time obtained in Block 1011, the component of standard exhaust gas measured in advance by the experiment, and the humidity of the standard exhaust gas measured in advance by the experiment, and is multiplied by the volume flow rate obtained in Block 1009 (Block 1010).

In this way, it is possible to calculate the first exhaust gas re-circulation gas flow rate.

Embodiment 5

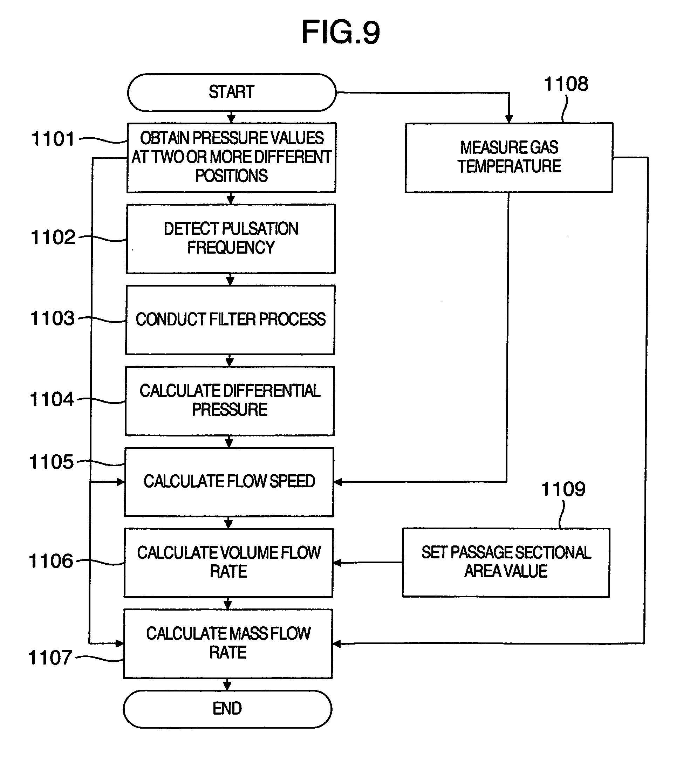

Fig. 9 is a flowchart illustrating an exemplary flow rate calculation procedure of the exhaust gas re-circulation gas in the measurement method according to the invention.

The measurement method according to the invention is carried out by periodically repeating the measurement and the calculation.

First, the pressure value and the temperature value are obtained by the exhaust pressure/exhaust temperature sensor 3 and the exhaust gas re-circulation gas pressure/temperature sensor 12 which are installed before and after the heat exchanger 10 (Blocks 1101 and 1108).

Subsequently, a pulsation frequency is detected by recognizing an interval (N shown in Fig. 5) between peaks of the pressure waveform obtained by a history of the pressure value for a predetermined time obtained in Block 1101 (Block 1102).

Subsequently, a cut-off frequency of the filter is set to a value obtained by multiplying the pulsation frequency detected in Block 1102 by a predetermined constant in terms of an experiment, and unnecessary noise components are removed by performing a low-pass filter process to the pressure waveform obtained by a history of the pressure value for the predetermined time (Block 1103).

Subsequently, a differential pressure is set to a pressure difference at a certain time among history points of the pressure waveform obtained in Block 1103 (Block 1104).

Subsequently, a flow speed is obtained from the pressure value measured at a certain time in Block 1101 and the temperature value measured at a certain time in Block 1108 and the differential pressure at a certain time obtained in Block 1104 (Block 1105).

Subsequently, a passage sectional area setting is carried out. This corresponds to a gas passage sectional area in the heat exchanger 10 (Block 1109).

Subsequently, a volume flow rate calculation is carried out. A value is obtained by multiplying the flow speed obtained in Block 1105 by the passage sectional area obtained in Block 1109 (Block 1106).

Subsequently, a mass flow rate calculation is carried out. Density of the exhaust gas re-circulation gas is obtained by a gas constant calculated from the pressure value at a certain time obtained in Block 1101, the gas temperature at a certain time obtained in Block 1108, the component of standard exhaust gas measured in advance by the experiment, and the humidity of the standard exhaust gas measured in advance by the experiment, and is multiplied by the volume flow rate obtained in Block 1106 (Block 1107).

In this way, it is possible to calculate the second exhaust gas re-circulation gas flow rate.

Embodiment 6

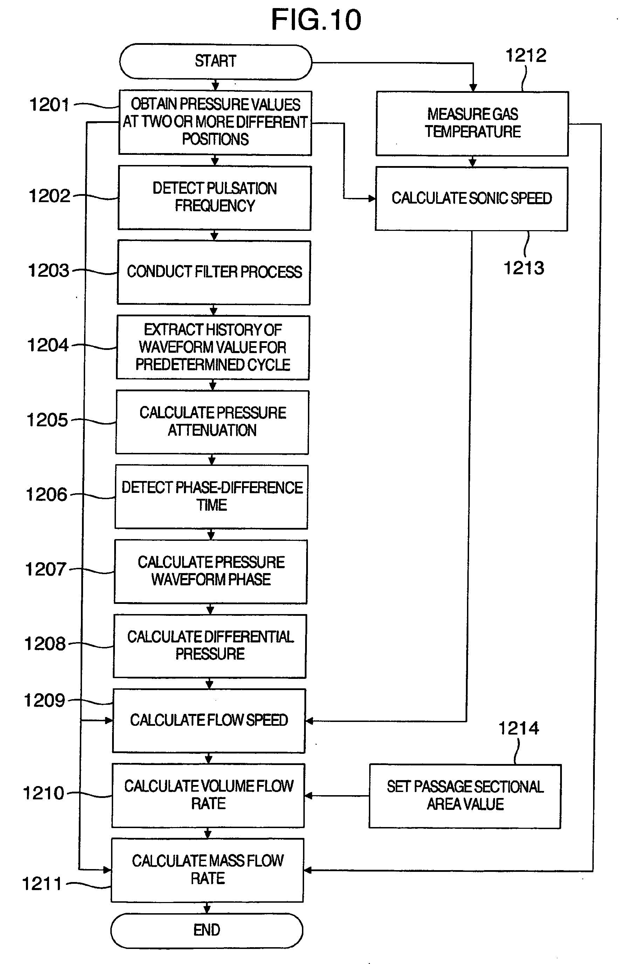

Fig. 10 is a flowchart illustrating an exemplary flow rate calculation procedure of the exhaust gas re-circulation gas in the measurement method according to the invention.

The measurement method according to the invention is carried out by periodically repeating the measurement and the calculation.

First, the pressure value and the temperature value are obtained by the exhaust pressure/exhaust temperature sensor 3 and the exhaust gas re-circulation gas pressure/temperature sensor 12 which are installed before and after the heat exchanger 10 (Blocks 1201 and 1212).

Subsequently, a sonic speed is calculated by comparing the pressure value measured at a certain time in Block 1201 and the temperature value measured at a certain time in Block 1212 with a database stored in advance (Block 1213).

Subsequently, a pulsation frequency is detected by recognizing an interval (N shown in Fig. 5) between peaks of the pressure waveform obtained by a history of the pressure value for the predetermined time obtained in Block 1201 (Block 1202).

Subsequently, a cut-off frequency of the filter is set to a value obtained by multiplying the pulsation frequency detected in Block 1202 to a predetermined constant in terms of an experiment, and unnecessary noise components are removed by performing a low-pass filter process of the frequency to the pressure waveform obtained by a history of the pressure value for the predetermined time (Block 1203).

Subsequently, a history of the measurement pressure value necessary for a phase comparison of the pressure waveform is extracted. An extraction period is calculated on the basis of the pulsation frequency detected in Block 1202 and a predetermined cycle, and a history of the measurement pressure value centering around a certain time is extracted (Block 1204).

Subsequently, a pressure attenuation correction is carried out. The pressure waveform on the downstream side of the heat exchanger 10 obtained by the history of the pressure value extracted in Block 1204 is attenuated by the pressure loss of the heat exchanger 10. For this reason, for instance, when comparing the phase of the peak of the pressure waveform on the upstream side of the heat exchanger 10 with that of the peak of the pressure waveform on the downstream side of the heat exchanger 10, it is supposed that precision of the phase comparison deteriorates if the pressure values at both peaks are different from each other. Accordingly, a ratio between the amplitude before the attenuation (a shown in Fig. 5) and the amplitude after the attenuation (b shown in Fig. 5) is set to an attenuation ratio (a/b), and the pressure attenuation correction is carried out by multiplying the pressure value after the attenuation by the attenuation ratio so that the maximum value and the minimum value in the history of both pressure values are identical with each other. As a result, it is possible to reduce deterioration of precision of the phase comparison due to the attenuation (Block 1205).

Subsequently, a phase-difference time (dt1 shown in Fig. 5) is detected. A time difference between a certain time (t1 shown in Fig. 5) and a time at which the pressure value on the upstream side of the heat exchanger 10 is identical with the pressure value subjected to the attenuation correction on the downstream side of the heat exchanger 10 at the above certain time is recognized. When there are a plurality of the time differences, the phase-difference time is set to a time difference of which an absolute value is the smallest (Block 1206).

Subsequently, a phase correction of the pressure waveform is carried out. In order to correct the phase difference (dt shown in Fig. 5) caused when the pressure propagates in the heat exchanger 10, the phase-difference time obtained in Block 1206 is added to an upstream pressure measurement time (Block 1207).

Subsequently, a differential pressure is set to a pressure difference at a certain time among history points of the pressure waveform obtained in Block 1207 (Block 1208).

Subsequently, a flow speed is obtained from the pressure value measured at a certain time in Block 1201, the temperature value measured at a certain time in Block 1212 and the differential pressure at a certain time obtained in Block 1208 (Block 1209).

Subsequently, a passage sectional area setting is carried out. This corresponds to a gas passage sectional area in the heat exchanger 10 (Block 1214) .

Subsequently, a volume flow rate calculation is carried out. A value is obtained by multiplying the flow speed obtained in Block 1209 by the passage sectional area obtained in Block 1214 (Block 1210).

Subsequently, a mass flow rate calculation is carried out. Density of the exhaust gas re-circulation gas is obtained by a gas constant calculated from the pressure value at a certain time obtained in Block 1201, the gas temperature at a certain time obtained in Block 1212, the component of standard exhaust gas measured in advance by the experiment, and a gas constant calculated from the humidity of the standard exhaust gas measured in advance by the experiment, and is multiplied by the volume flow rate obtained in Block 1210 (Block 1211).

In this way, it is possible to calculate the third exhaust gas re-circulation gas flow rate.

Embodiment 7

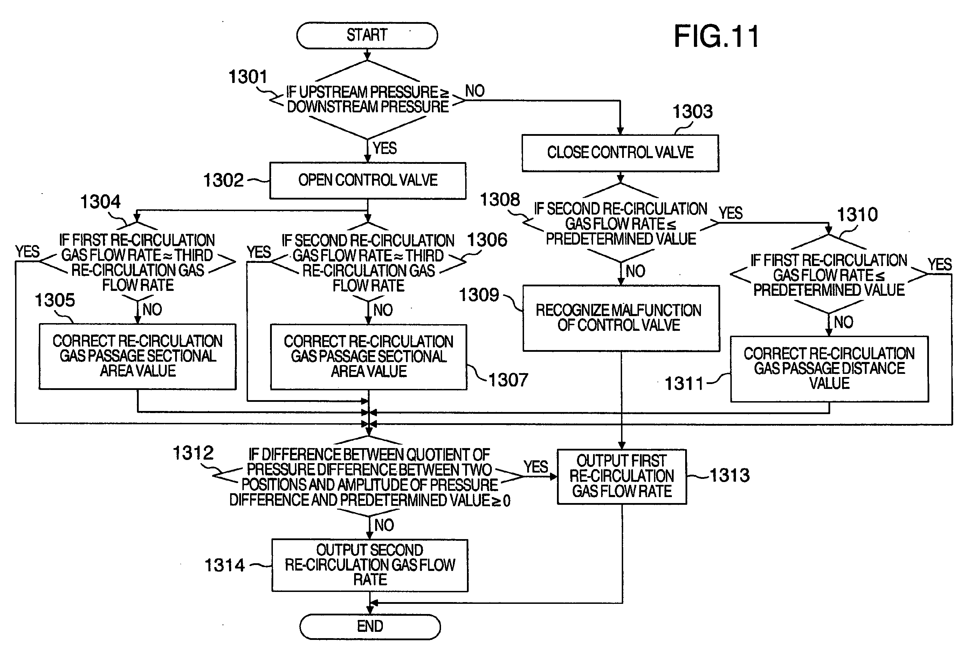

Fig. 11 is a flowchart illustrating another exemplary flow rate calculation procedure of the exhaust gas re-circulation gas in the measurement method according to the invention.

The measurement method according to the invention is carried out by periodically repeating the measurement and the calculation and by simultaneously calculating the first exhaust gas re-circulation gas flow rate, the second exhaust gas re-circulation gas flow rate, and the third exhaust gas re-circulation gas flow rate by the use of the measurement values.

Here, the third exhaust gas re-circulation gas flow rate is obtained as follows. First, an intake air flow rate 24 experimentally measured is stored in advance for each engine rpm as well as the intake pressure value measured by the intake pressure sensor 14 while the exhaust gas re-circulation gas flow control valve 11 shown in Fig. 1 is closed. Subsequently, a difference is obtained between the stored intake air flow rate 24 and an intake air flow rate 24' measured when the exhaust gas re-circulation gas flow control valve 11 is opened, so as to obtain the third exhaust gas re-circulation gas flow rate by using the above difference.

Validity of the third exhaust gas re-circulation gas flow rate is determined by a comparison of correlation data of the engine rpm, the intake air flow rate, and the opening degree of the exhaust gas re-circulation gas flow control valve 11, which are obtained in advance by checking operations. When a large error occurs, it is recognized that the driving state of the engine 19 or the measurement equipment is abnormal.

First, the upstream pressure value of the heat exchanger 10 is compared with the downstream pressure value thereof (Block 1301).

Subsequently, when the comparison result obtained in Block 1301 satisfies the positive flow condition, the exhaust gas re-circulation gas flow control valve 11 is opened (Block 1302).

Subsequently, when the comparison result obtained in Block 1301 satisfies the negative flow conciliation, the exhaust gas re-circulation gas flow control valve 11 is closed (Block 1303).

Subsequently, when the exhaust gas re-circulation gas flow control valve 11 is opened in accordance with the determination in Block 1302, the first exhaust gas re-circulation gas flow rate is compared with the third exhaust gas re-circulation gas flow rate (Block 1304).

Subsequently, when a difference between the first exhaust gas re-circulation gas flow rate and the third exhaust gas re-circulation gas flow rate is not less than a predetermined value (for instance, ±5% relative to the third exhaust gas re-circulation gas flow rate) in accordance with the determination in Block 1304, the exhaust gas re-circulation passage sectional area value used to calculate the first exhaust gas re-circulation gas flow rate is corrected so that both flow rates are identical with each other (Block 1305).

Subsequently, when the exhaust gas re-circulation gas flow control valve 11 is opened in accordance with the determination in Block 1302, the second exhaust gas re-circulation gas flow rate is compared with the third exhaust gas re-circulation gas flow rate (Block 1306).

Subsequently, when a difference between the second exhaust gas re-circulation gas flow rate and the third exhaust gas re-circulation gas flow rate is not less than a predetermined value (for instance, ±5% relative to the third exhaust gas re-circulation gas flow rate) in accordance with the determination in Block 1306, the exhaust gas re-circulation passage sectional area value used to calculate the second exhaust gas re-circulation gas flow rate is corrected so that both flow rates are identical with each other (Block 1307).

Subsequently, when the exhaust gas re-circulation gas flow control valve 11 is closed in accordance with the determination in Block 1303, the second exhaust gas re-circulation gas flow rate is compared with a predetermined value (Block 1308).

Subsequently, when it is determined that the second exhaust gas re-circulation gas flow rate is larger than the predetermined value in accordance with the determination in Block 1308, it is recognized that the exhaust gas re-circulation gas flow control valve 11 has a functional trouble (Block 1309).

Subsequently, when it is determined that the second exhaust gas re-circulation gas flow rate is the predetermined value or less in accordance with the determination in Block 1308, the first exhaust gas re-circulation gas flow rate is compared with the predetermined value (Block 1310).

Subsequently, when it is determined that the first exhaust gas re-circulation gas flow rate is larger than the predetermined value in accordance with the determination in Block 1310, the exhaust gas re-circulation passage distance value between two or more different pressure measurement positions used to calculate the first exhaust gas re-circulation gas flow rate is corrected so that the first exhaust gas re-circulation gas flow rate becomes 0 (Block 1311).

Subsequently, a quotient is obtained from a difference between static pressures on the upstream side and the downstream side of the heat exchanger 10 at a certain time and the amplitude of the static pressure difference, and a difference is obtained between the quotient and a predetermined value (Block 1312).

Subsequently, when the value obtained in Block 1312 is not less than 0 or when it is recognized that the exhaust gas re-circulation gas flow control valve 11 has the functional trouble in Block 1309, the first exhaust gas re-circulation gas flow rate is set to a calculation result (Block 1313).

Subsequently, when the value obtained in Block 1312 is smaller than 0, the second exhaust gas re-circulation gas flow rate is set to a calculation result (Block 1314).

Embodiment 8

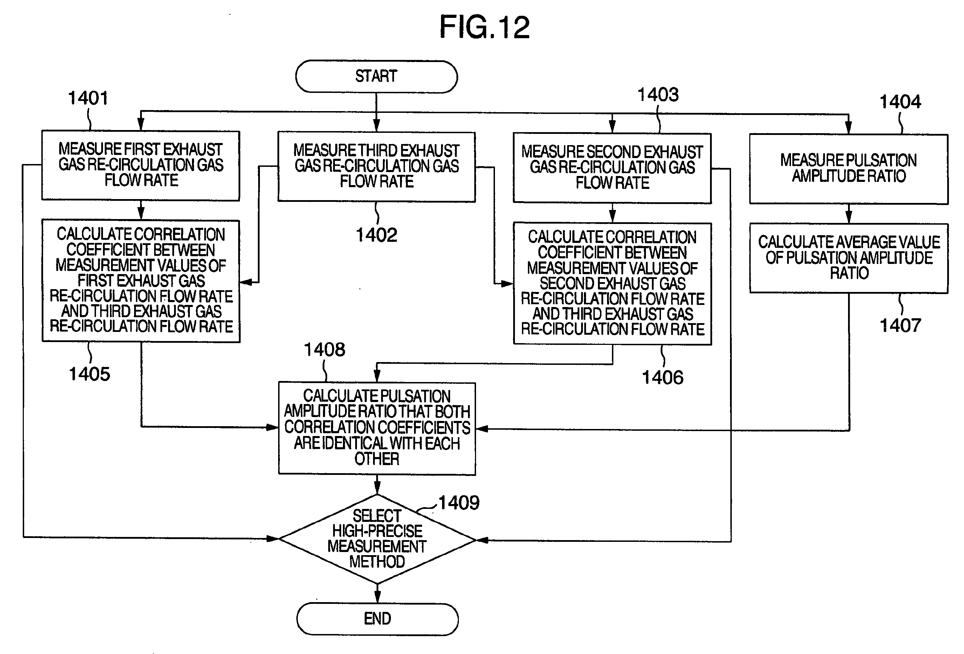

Fig. 12 is a flowchart illustrating another exemplary flow rate calculation procedure of the exhaust gas re-circulation gas in the measurement method according to the invention.

The measurement method according to the invention is carried out by storing the calculation result while periodically repeating the measurement and the calculation.

First, the first exhaust gas re-circulation gas flow rate, the second exhaust gas re-circulation gas flow rate, and the third exhaust gas re-circulation gas flow rate are calculated, and then the calculation results are stored (Blocks 1401 to 1403).

Subsequently, a quotient is obtained from a difference between static pressures measured at two or more positions at a certain time by the pressure measuring portions of the exhaust pressure/exhaust temperature sensor 3 and the exhaust gas re-circulation gas pressure/temperature sensor 12 and the amplitude of the static pressure difference, and then the quotient is stored as the pulsation amplitude ratio (Block 1404).

Subsequently, calculation results for a predetermined number of times are extracted from the calculation results stored in Block 1404, an average value of the extracted calculation results is calculated, and then the calculation result is stored as an average value of the pulsation amplitude ratio (Block 1407).

Subsequently, calculation results for a predetermined number of times are extracted from the calculation results stored in Blocks 1401 and 1402, a correlation efficient is calculated by a least square method using the values of the first exhaust gas re-circulation gas flow rate obtained in Block 1401 and the third exhaust gas re-circulation gas flow rate obtained in Block 1402, and then the calculation result is stored as a correlation coefficient 1 (Block 1405).

Subsequently, calculation results for a predetermined number of times are extracted from the calculation results stored in Blocks 1402 and 1404, a correlation efficient is calculated by the least square method using the values of the second exhaust gas re-circulation gas flow rate obtained in Block 1403 and the third exhaust gas re-circulation gas flow rate obtained in Block 1402, and then the calculation result is stored as a correlation coefficient 2 (Block 1406).

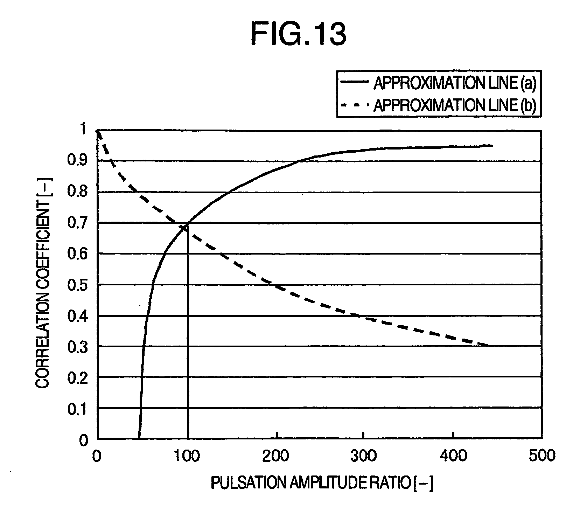

Subsequently, calculation results for a predetermined number of times are extracted from the calculation results stored in Blocks 1405 to 1407, and then an approximation line (a) (see Fig. 13) is obtained by the least square method using the values of the average value of the pulsation amplitude ratio obtained in Block 1407 and the correlation coefficient 1 obtained in Block 1405. At the same time, an approximation line (b) (see Fig. 13) is obtained by the least square method using the values of the average value of the pulsation amplitude ratio obtained in Block 1407 and the correlation coefficient 2 obtained in Block 1406. Subsequently, a pulsation amplitude ratio is obtained at a point where the approximation line (a) intersects the approximation line (b), and then the pulsation amplitude ratio is set to a selection determination value (Block 1408).

Subsequently, it is determined whether the pulsation amplitude ratio is larger than the selection determination value by comparing the selection determination value obtained in Block 1408 with the pulsation amplitude ratio at a certain time obtained in Block 1404. Subsequently, depending on the determined result, the output value is changed into the first exhaust gas re-circulation gas flow rate obtained in Block 1401 and the second exhaust gas re-circulation gas flow rate obtained in Block 1403 (Block 1409).

Embodiment 9

Fig. 13 is an exemplary method for selecting a high-precise measurement method for flow rate of exhaust gas re-circulation with respect to the pulsation amplitude ratio in Block 1408 of Embodiment 8.

It is supposed that the measurement precision of the first exhaust gas re-circulation gas flow rate and the second exhaust gas re-circulation gas flow rate is concerned with the pulsation amplitude ratio obtained from the quotient of the difference between the static pressures on the upstream side and the downstream side of the heat exchanger 10 and the amplitude of the static pressure difference. For this reason, it is possible to select the high-precise measurement method by obtaining the relative correlation coefficients between the first and third exhaust gas re-circulation gas flow rates, and between the second and third exhaust gas re-circulation gas flow rates. In the example shown in Fig. 13, the selection determination value is set to a condition capable of measuring a pulsation amplitude ratio 100 in which both approximation lines intersect with each other, and thus the measurement method having high correlation coefficient is selected. This is obtained in advance in terms of an experiment, and is used as an initial value of the selection determination value. Since the optimal value of the selection determination value varies in accordance with a soiled and damaged state of the passage in the heat exchanger 10, the selection determination value is examined and corrected while a correlation estimation is carried out whenever measuring the exhaust gas re-circulation gas flow rate after starting the engine 19, thereby reducing deterioration in the measurement precision of the exhaust gas re-circulation gas flow rate.

The present invention is not limited to the application of the internal combustion engine, but may be applied to a high-precise pulsation flow meter as an industrial product in other industrial fields.

It should be further understood by those skilled in the art that although the foregoing description has been made an embodiments of the invention, the invention is not limited thereto and various changes and modifications may be made without departing from the Spirit of the invention and the scope of the appended claims.

The above features and embodiments can be combined partly or as a whole.

## Claims

1. A measuring equipment for flow of exhaust gas re-circulation comprising:

    a control valve (11) which is provided in an exhaust gas re-circulation passage (9) of an internal combustion engine (19) so as to control a flow rate in the exhaust gas re-circulation passage (9);
    a heat exchanger (10) which cools exhaust gas re-circulation gas;
    pressure sensors (12) which measure pressure of the exhaust gas re-circulation gas at two or more positions of the exhaust gas re-circulation passage (9) before and after the heat exchanger;
    a temperature sensor (12) which measures temperature of the exhaust gas re-circulation gas; and
    an intake air flow sensor (14) which is provided in an intake air passage (20) so as to measure a flow rate of intake air.

2. The measuring equipment according to Claim 1, further comprising:

    a first exhaust gas re-circulation gas flow measuring unit which calculates a first exhaust gas re-circulation gas flow rate on the basis of a sectional area of the exhaust gas re-circulation passage (9) of the heat exchanger (10), a phase-difference time of a pressure waveform, and a distance of the exhaust gas re-circulation passage (9) between two or more different pressure measurement positions measured by the pressure sensors (12);
    a second exhaust gas re-circulation gas flow measuring unit which calculates a second exhaust gas re-circulation gas flow rate on the basis of a difference between pressure values measured at two or more different measurement positions by the pressure sensors (12) and the sectional area of the exhaust gas re-circulation passage (9) of the heat exchanger (10); and
    a third exhaust gas re-circulation gas flow measuring unit which calculates a third exhaust gas re-circulation gas flow rate on the basis of a difference between the intake air flow rate measured by the intake air flow sensor (14) and a predetermined value.

3. The measuring equipment according to Claim 2, wherein when the second exhaust gas re-circulation gas flow rate measured by the second exhaust gas re-circulation gas flow measuring unit while closing the control valve (11) is a predetermined value or less, a distance value of the exhaust gas re-circulation passage (9) between two or more different pressure measurement positions used for a calculation of the first exhaust gas re-circulation gas flow measuring unit is corrected so that the first exhaust gas re-circulation gas flow rate measured by the first exhaust gas re-circulation gas flow measuring unit becomes zero.

4. The measuring equipment according to Claim 2 or 3, wherein when a measurement flow rate difference between the third exhaust gas re-circulation gas flow rate measured by the third exhaust gas re-circulation gas flow measuring unit and the first exhaust gas re-circulation gas flow rate measured by the first exhaust gas re-circulation gas flow measuring unit is larger than a predetermined value, a sectional area value of the exhaust gas re-circulation passage (9) of the heat exchanger (10) used for a calculation of the first exhaust gas re-circulation gas flow measuring unit is corrected so that the measurement flow rate difference becomes zero.

5. The measuring equipment according to at least one of Claims 2 to 4, wherein when a measurement flow rate difference between the third exhaust gas re-circulation gas flow rate measured by the third exhaust gas re-circulation gas flow measuring unit and the second exhaust gas re-circulation gas flow rate measured by the second exhaust gas re-circulation gas flow measuring unit is larger than a predetermined value, a sectional area value of the exhaust gas re-circulation passage (9) of the heat exchanger (10) used for a calculation of the second exhaust gas re-circulation gas flow measuring unit is corrected so that the measurement flow rate difference becomes zero.

6. The measuring equipment according to at least one of Claims 2 to 5, wherein one of the first exhaust gas re-circulation gas flow measuring unit and the second exhaust gas re-circulation gas flow measuring unit used to measure the

**EP 2 009 267 A2**

exhaust gas re-circulation gas flow rate is selected on the basis of a difference between a predetermined value and a quotient of a pressure difference between pressure values measured at two or more measurement positions by the pressure sensors (12) and an amplitude of the pressure difference.

**12**

# FIG.1

# FIG.2

# FIG.3

3′      10      12′

3′(b)   3′(a)   3′(t)      12′(b)    12′(a)   12′(t)

# FIG.4

3″      10      12″

3″(b)   3″(a)   3″(t)   3″(c)      12″(b)    12″(a)   12″(t)    12″(c)

# FIG.5

# FIG.6

# FIG.7

# FIG.8

```
                    START ─────────────────────┐
                                                ▼                  1011
1001 ─  OBTAIN PRESSURE VALUES                      MEASURE GAS
        AT TWO OR MORE DIFFERENT                    TEMPERATURE
        POSITIONS ──────────────┐
                    │           │
                    ▼           │
1002 ─  DETECT PULSATION        │                   CALCULATE SONIC SPEED
        FREQUENCY               │
                    │           └──────────────▶
                    ▼                                       1012
1003 ─  CONDUCT FILTER PROCESS
                    │
                    ▼
        EXTRACT HISTORY OF
1004 ─  WAVEFORM VALUE FOR
        PREDETERMINED CYCLE
                    │
                    ▼
1005 ─  CORRECT PRESSURE
        ATTENUATION
                    │
                    ▼                               1013
1006 ─  DETECT PHASE-DIFFERENCE
        TIME
                    │
                    ▼
1007 ─  CALCULATE PRESSURE  ◀────  SET PASSAGE LENGTH VALUE
        PROPAGATION SPEED
                    │
                    ▼                               1014
1008 ─  CALCULATE FLOW SPEED  ◀──
                    │
                    ▼
1009 ─  CALCULATE VOLUME FLOW  ◀──  SET PASSAGE SECTIONAL
        RATE                        AREA VALUE
                    │
                    ▼
1010 ─  CALCULATE MASS FLOW
        RATE
                    │
                    ▼
                   END
```

# FIG.9

START

1101 — OBTAIN PRESSURE VALUES AT TWO OR MORE DIFFERENT POSITIONS

1108

1102 — DETECT PULSATION FREQUENCY

MEASURE GAS TEMPERATURE

1103 — CONDUCT FILTER PROCESS

1104 — CALCULATE DIFFERENTIAL PRESSURE

1105 — CALCULATE FLOW SPEED

1109

1106 — CALCULATE VOLUME FLOW RATE

SET PASSAGE SECTIONAL AREA VALUE

1107 — CALCULATE MASS FLOW RATE

END

# FIG.10

```
            START ──────────────────────────┐
                                             │        1212
                                             ▼
1201 ── OBTAIN PRESSURE VALUES          MEASURE GAS
        AT TWO OR MORE DIFFERENT        TEMPERATURE
        POSITIONS ──────────┐
               │            │                │
               ▼            │                ▼
1202 ── DETECT PULSATION    └────────▶  CALCULATE SONIC SPEED
        FREQUENCY
               │                             1213
               ▼
1203 ── CONDUCT FILTER PROCESS
               │
               ▼
1204 ── EXTRACT HISTORY OF
        WAVEFORM VALUE FOR
        PREDETERMINED CYCLE
               │
               ▼
1205 ── CALCULATE PRESSURE
        ATTENUATION
               │
               ▼
1206 ── DETECT PHASE-DIFFERENCE
        TIME
               │
               ▼
1207 ── CALCULATE PRESSURE
        WAVEFORM PHASE
               │
               ▼
1208 ── CALCULATE DIFFERENTIAL
        PRESSURE
               │
               ▼
1209 ── CALCULATE FLOW SPEED  ◀──────┐
               │                      │       1214
               ▼                      │
1210 ── CALCULATE VOLUME FLOW  ◀── SET PASSAGE SECTIONAL
        RATE                        AREA VALUE
               │
               ▼
1211 ── CALCULATE MASS FLOW
        RATE
               │
               ▼
             END
```

# FIG.11

START

1301 IF UPSTREAM PRESSURE ≥ DOWNSTREAM PRESSURE — NO

1303 CLOSE CONTROL VALVE

YES

1302 OPEN CONTROL VALVE

1304 IF FIRST RE-CIRCULATION GAS FLOW RATE ≈ THIRD RE-CIRCULATION GAS FLOW RATE — YES

1306 IF SECOND RE-CIRCULATION GAS FLOW RATE ≈ THIRD RE-CIRCULATION GAS FLOW RATE — YES

NO

NO

1305 CORRECT RE-CIRCULATION GAS PASSAGE SECTIONAL AREA VALUE

CORRECT RE-CIRCULATION GAS PASSAGE SECTIONAL AREA VALUE 1307

1308 IF SECOND RE-CIRCULATION GAS FLOW RATE ≤ PREDETERMINED VALUE — YES

1310 IF FIRST RE-CIRCULATION GAS FLOW RATE ≤ PREDETERMINED VALUE — YES

NO

1309 RECOGNIZE MALFUNCTION OF CONTROL VALVE

NO

1311 CORRECT RE-CIRCULATION GAS PASSAGE DISTANCE VALUE

1312 IF DIFFERENCE BETWEEN QUOTIENT OF PRESSURE DIFFERENCE BETWEEN TWO POSITIONS AND AMPLITUDE OF PRESSURE DIFFERENCE AND PREDETERMINED VALUE ≥ 0 — YES

1313 OUTPUT FIRST RE-CIRCULATION GAS FLOW RATE

NO

1314 OUTPUT SECOND RE-CIRCULATION GAS FLOW RATE

END

EP 2 009 267 A2

# FIG.12

```
                              ┌──────────┐
                              │  START   │
                              └────┬─────┘
```

1401                        1403                    1404

**1401** MEASURE FIRST EXHAUST GAS RE-CIRCULATION GAS FLOW RATE

MEASURE THIRD EXHAUST GAS RE-CIRCULATION GAS FLOW RATE — **1402**

**1403** MEASURE SECOND EXHAUST GAS RE-CIRCULATION GAS FLOW RATE

**1404** MEASURE PULSATION AMPLITUDE RATIO

CALCULATE CORRELATION COEFFICIENT BETWEEN MEASUREMENT VALUES OF FIRST EXHAUST GAS RE-CIRCULATION FLOW RATE AND THIRD EXHAUST GAS RE-CIRCULATION FLOW RATE — **1405**

CALCULATE CORRELATION COEFFICIENT BETWEEN MEASUREMENT VALUES OF SECOND EXHAUST GAS RE-CIRCULATION FLOW RATE AND THIRD EXHAUST GAS RE-CIRCULATION FLOW RATE — **1406**

CALCULATE AVERAGE VALUE OF PULSATION AMPLITUDE RATIO — **1407**

**1408** CALCULATE PULSATION AMPLITUDE RATIO THAT BOTH CORRELATION COEFFICIENTS ARE IDENTICAL WITH EACH OTHER

**1409** SELECT HIGH-PRECISE MEASUREMENT METHOD

```
                              ┌──────────┐
                              │   END    │
                              └──────────┘
```

EP 2 009 267 A2

# FIG.13

**EP 2 009 267 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1178760 A
- JP 2007101426 A
- JP 2007 A
- JP 101426 A